# DEMANDE DE BREVET EUROPEEN

(11) **EP 1 251 340 A1**
(43) Date de publication de la demande: **23.10.2002**
(21) Numéro de dépôt: 02290937.8
(22) Date de dépôt: 15.04.2002
(51) Int. Cl.: G01F 23/70, G01F 23/76

(54) **Dispositif de détection de niveau de diélectrique pour transformateur haute tension**

(30) Priorité: 17.04.2001 FR 0105171
(71) Demandeur: Alstom, 75116 Paris (FR)
(72) Inventeur: Folliot, Philippe, 76350 Oissel (FR); Lebigre, Michel, 76710 Montville (FR)
(74) Mandataire: Gosse, Michel

(57) **Abrégé**

Le dispositif de détection de niveau de liquide diélectrique pour transformateur haute tension ayant au moins un enroulement immergé dans ledit diélectrique, comprend un tube (33B) muni de deux contacts électriques (34A,34B) écartés l'un de l'autre et un flotteur (33A) au moins en partie électriquement conducteur logé dans le tube et porté par le diélectrique remplissant normalement le tube. Le flotteur connecte les deux contacts lorsque le niveau du diélectrique passe sous un certain niveau de sécurité (NS). Les deux contacts (34A,34B) sont disposés dans la base (33E) du tube de sorte que leur connexion par le flotteur se produit dans le diélectrique, la base et le flotteur comportant un système d'attraction magnétique.

## Description

L'invention concerne un dispositif de détection de niveau de liquide diélectrique pour un transformateur haute tension ayant au moins un enroulement immergé dans ledit diélectrique, comprenant un tube muni de deux contacts électriques écartés l'un de l'autre et un flotteur au moins en partie électriquement conducteur logé dans le tube et porté par le diélectrique remplissant normalement le tube, le flotteur connectant les deux contacts lorsque le niveau du diélectrique passe sous un certain niveau de sécurité.

Un transformateur haute tension immergé comportant un enroulement plongé dans un liquide diélectrique contenu dans une cuve dans laquelle est disposé un dispositif de détection de niveau est déjà connu du document de brevet européen EP-0800252.

Le brevet français FR-2629955 décrit plus particulièrement un tel dispositif de détection de niveau. Celui-ci comporte un tube avec des contacts pénétrant selon une direction radiale à l'intérieur du tube et un flotteur en forme de sphère qui connecte les contacts.

Le but de l'invention est de proposer un détecteur de niveau d'une conception plus simple et procurant une connexion électrique fiable des contacts par le flotteur.

A cet effet, l'invention a pour objet un dispositif de détection de niveau de liquide diélectrique pour un transformateur haute tension ayant au moins un enroulement immergé dans ledit diélectrique, comprenant un tube muni de deux contacts électriques écartés l'un de l'autre et un flotteur au moins en partie électriquement conducteur logé dans le tube et porté par le diélectrique remplissant normalement le tube, le flotteur connectant les deux contacts lorsque le niveau du diélectrique passe sous un certain niveau de sécurité, caractérisé en ce que les deux contacts sont disposés dans la base du tube, leur connexion par le flotteur se produisant dans le diélectrique et en ce que la base du tube et le flotteur comportent un système d'attraction magnétique.

Cette disposition des contacts dans la base du tube permet d'incorporer facilement et simplement le système d'attraction magnétique dans le détecteur de niveau. Ce système d'attraction magnétique engendre une force tendant à rapprocher le flotteur des contacts pour rendre certaine et irréversible la connexion électrique des contacts par le flotteur, et est réalisé dans sa forme la plus simple avec un tube dont la base qui est pénétrée par les contacts est réalisée en un matériau ferromagnétique et électriquement isolant qui engendre une force attirant la partie inférieure métallique du flotteur réalisant la connexion électrique entre les deux contacts. La partie inférieure du flotteur peut par exemple être une platine métallique en forme de disque servant de lest pour le flotteur. En variante, la base du tube fait partie intégrante du tube, est réalisée en une matière isolante électriquement et est munie d'un aimant permanent. Un autre aimant permanent peut également être disposé dans le flotteur, l'aimant dans le flotteur et l'aimant dans la base du tube s'attirant mutuellement ce qui augmente la force d'attraction magnétique. Ces deux aimants permanents respectivement dans la base du tube et dans le flotteur sont disposés coaxialement l'un par rapport à l'autre pour obtenir une force d'attraction magnétique dirigée axialement dans le tube. Avec cette construction du détecteur de niveau selon l'invention, on obtient une grande sécurité de fonctionnement car il n'y a pas de risque de création d'arc électrique, au moment de la connexion électrique des contacts par le flotteur, dans un mélange gazeux explosif qui est souvent généré dans un transformateur immergé lorsqu'il est en défaut.

Selon encore une particularité du détecteur de niveau selon l'invention, le flotteur est un corps creux métallique de forme cylindrique lesté avec le diélectrique du transformateur pour être simple et peu coûteux à réaliser. Le flotteur est lesté pour avoir un centre de gravité situé sous sa ligne de flottaison dans le diélectrique. De la sorte on évite un comportement instable du flotteur dans le tube et en particulier le basculement du flotteur et son coincement dans le tube.

Selon encore une autre particularité du détecteur de niveau selon l'invention, le tube est fermé à sa partie supérieure par un fond muni de protubérances pointues empêchant un effet d'adhérence entre le fond du tube et le sommet du flotteur. En effet, si le flotteur reste longtemps en haut du tube (ce qui est le cas tant que le diélectrique ne s'écoule pas de la cuve du transformateur) avec une grande surface de contact entre le sommet du flotteur et le fond du tube, il peut se produire cet effet d'adhérence empêchant le flotteur de suivre le niveau du diélectrique. Ces protubérances sur le fond du tube (ou de façon équivalente sur le sommet du flotteur) empêchent cet effet d'adhérence.

Le fond du tube est normalement fermé de façon étanche (principe de la colonne barométrique) et le tube est rempli intégralement de diélectrique. Du fait du remplissage et de l'effet de colonne barométrique, le tube reste rempli de diélectrique tant que le niveau de celui-ci n'atteint pas le niveau critique de sécurité. Il n'y a donc pas de risque d'une connexion électrique entre le flotteur et les deux contacts tant que ce niveau critique n'est pas atteint. Le tube est muni d'ouvertures disposées au-dessus des deux contacts. Dès que le niveau du diélectrique atteint le niveau critique, l'intérieur du tube est mis en communication par ces ouvertures avec le milieu gazeux occupant la partie supérieure de la cuve du transformateur. L'effet de colonne barométrique régnant à l'intérieur du tube est donc brutalement cassé et le diélectrique contenu à l'intérieur du tube s'écoule rapidement dans la cuve du transformateur par les ouvertures. Le flotteur guidé par le tube et en flottaison dans le diélectrique vient établir la connexion entre les deux contacts pour déclencher l'isolement du transformateur, par exemple en établissant un court-circuit provoquant la coupure de fusibles de protection. Le tube passe ainsi très rapidement de la situation du tube plein, contacts parfaitement isolés l'un de l'autre, à la situation tube vide, flotteur en position de continuité électrique avec les deux contacts. Il n'y a aucune possibilité de situation intermédiaire dans laquelle le flotteur pourrait se trouver près des contacts sans les toucher et de toute façon les contacts restent immergés dans le diélectrique même quand le diélectrique atteint le niveau critique ce qui évite les contacts inopinés susceptibles de provoquer des dégâts.

L'invention s'étend à un transformateur haute tension dans lequel le tube du détecteur de niveau selon l'invention est formé dans la paroi de la cuve du transformateur et le flotteur est rendu accessible depuis l'extérieur de la cuve si le tube du détecteur de niveau est fermé à sa partie supérieure par un bouchon amovible.

Un exemple de réalisation du dispositif de protection selon l'invention est décrit ci-après et illustré sur les dessins.

La figure 1 montre très schématiquement un dispositif de protection pour un transformateur haute tension incluant un détecteur de niveau selon l'invention.

Les figures 2 à 4 illustrent schématiquement en coupe différentes positions du flotteur dans le tube pour des niveaux différents du diélectrique dans la cuve du transformateur.

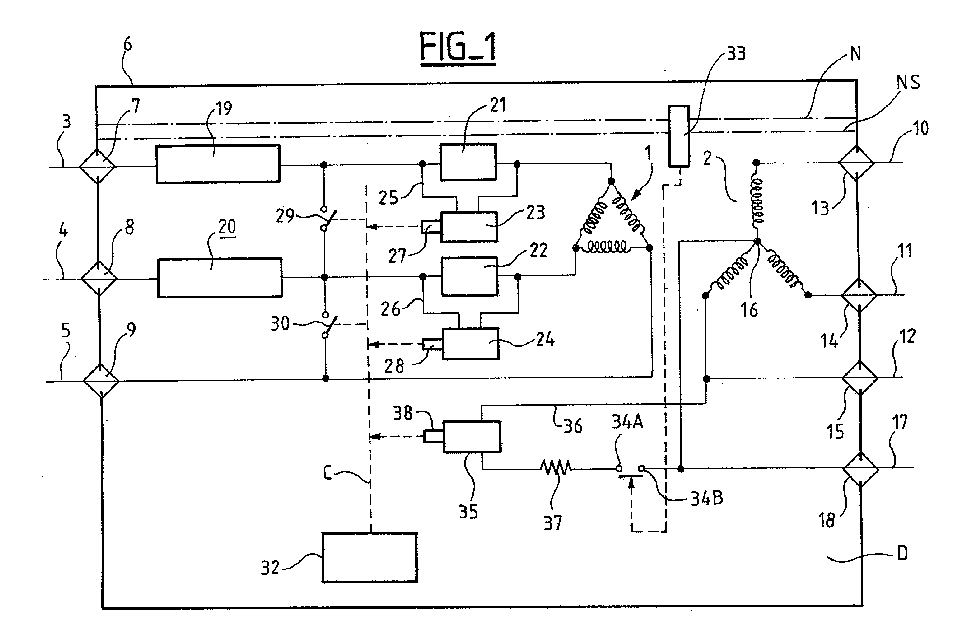

Le transformateur illustré sur la figure 1 est par exemple un transformateur 20/0,410 kvolts. On a figuré en 1 l'enroulement haute tension en triangle et en 2 l'enroulement basse tension en étoile. L'enroulement haute tension 1 est alimenté par les trois phases 3,4 et 5 qui pénètrent dans la cuve 6 du transformateur, schématiquement représentée par un rectangle, par des traversées isolantes 7,8 et 9. La cuve 6 est remplie d'un liquide diélectrique comme de l'huile. Le transformateur est de préférence un transformateur à remplissage intégral et le niveau N du diélectrique D (supérieur au niveau NS de sécurité) repéré sur la figure 1 indique qu'il s'est produit une certaine perte de diélectrique depuis le remplissage de la cuve du transformateur sans aucun risque pour celui-ci.

L'enroulement basse tension 2 immergé, comme l'enroulement 1, dans le diélectrique D alimente les lignes de phases 10,11 et 12 en traversant la cuve 6 par des traversées isolantes 13,14 et 15 et de même, le point neutre 16 de l'enroulement 2 est relié à un conducteur neutre 17 traversant la cuve par une traversée isolante 18.

Côté haute tension, deux des trois phases, ici les phases repérées 3 et 4 sont reliées à l'enroulement haute tension 1 par l'intermédiaire de fusibles limiteurs de courant respectivement 19 et 20 immergés dans le diélectrique.

Des micro-fusibles 21 et 22 sont interposés entre l'enroulement 1 et les fusibles 19 et 20 respectivement. Des percuteurs 23 et 24 sont connectés respectivement en parallèle aux bornes des micro-fusibles 21 et 22. Un percuteur est connu en soi ; il est constitué d'un doigt tel que 27,28 poussé par un ressort maintenu bandé par un fil d'acier tel que 25 et 26. La libération du doigt d'un percuteur commande la fermeture d'un court-circuiteur triphasé 29,30 conduisant à l'isolation du transformateur par rapport au réseau. Cette commande est assurée par l'intermédiaire d'un système mécanique de déclenchement quelconque et est figurée par le tracé en traits discontinus C.

Le dispositif de protection du transformateur comporte un détecteur de pression 32 qui commande également le court-circuiteur 29,30 et un détecteur de niveau 33 selon l'invention ayant deux contacts 34A et 34B respectivement connectés à une phase 12 de l'enroulement 2 et au point neutre 16 à travers un circuit comprenant un percuteur 35. Une résistance de limitation 37 est insérée dans le circuit si nécessaire. La connexion électrique des contacts 34A et 34B fait circuler dans ce circuit un courant qui fait fondre le fil d'acier 36 du percuteur 35 de sorte que la libération du doigt 38 du percuteur 35 provoque la fermeture du court-circuiteur 29,30. Ainsi en cas d'apparition d'une fuite de la cuve entraînant une baisse de niveau du liquide diélectrique en dessous du niveau de sécurité NS, le détecteur de niveau 33 provoque un court-circuit franc entre les trois phases haute tension 3,4 et 5 lequel provoque immédiatement la coupure des fusibles 19 et 20 et l'isolation du transformateur par rapport au réseau.

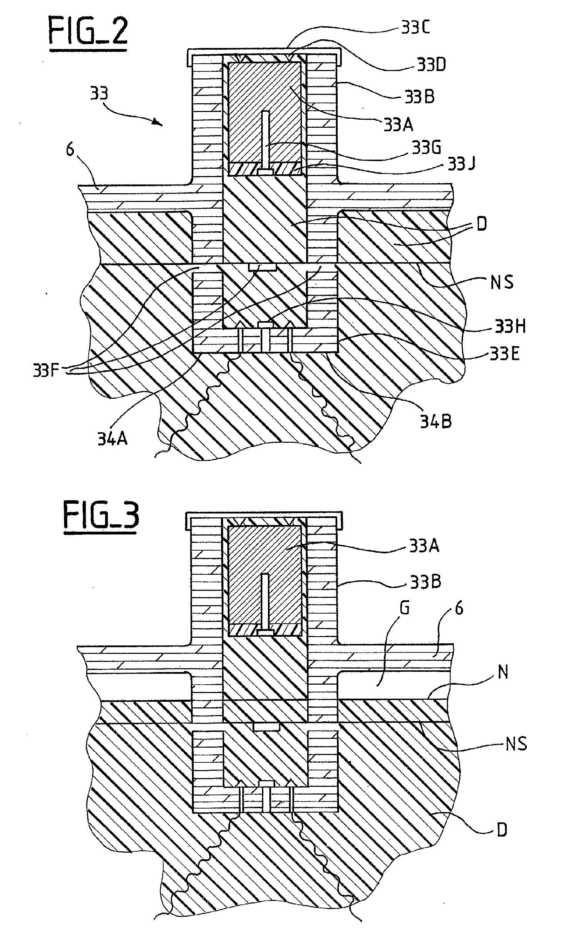

Les figures 2 à 4 montrent plus en détails mais schématiquement la construction du détecteur de niveau 33 selon l'invention. Ce détecteur de niveau 33 est installé à la partie supérieure de la cuve au-dessus des enroulements 1 et 2 et des fusibles 19 et 20 et est au moins partiellement immergé dans le diélectrique D. C'est uniquement pour des raisons de clarté du schéma électrique que les contacts 34A et 34B sont montrés séparés du détecteur de niveau 33 sur la figure 1.

Le détecteur de niveau 33 comporte un flotteur 33A au moins en partie électriquement conducteur qui est porté par le diélectrique D à l'intérieur d'un tube 33B généralement cylindrique. Dans l'exemple, le flotteur est un cylindre de diamètre extérieur légèrement inférieur au diamètre intérieur du tube. Le tube 33B est normalement rempli de diélectrique D et le flotteur 33A est guidé par le tube 33B vers les contacts 34A et 34B lorsque le niveau du diélectrique s'abaisse dans la cuve. Les deux contacts 34A et 34B pénètrent le tube 33B par sa base et sont disposés sous le flotteur 33A. Ils sont écartés l'un de l'autre dans la base du tube d'une distance interdisant tout risque de formation entre eux d'un arc électrique dans le diélectrique à la tension de fonctionnement et tension d'essai du transformateur. Ils sont réalisés par exemple en cuivre ou en laiton.

Sur les figures 2 à 4, on a représenté le tube 33B comme faisant partie intégrante de la paroi de la cuve 6 et saillant au-dessus de la surface supérieure de la cuve 6. Dans ce cas, le tube ne nécessite pas de moyens de fixation particulier dans la cuve. Il est fermé de façon étanche à sa partie supérieure par un fond 33C qui peut en outre être amovible pour rendre accessible le flotteur depuis l'extérieur de la cuve. Il peut s'agir par exemple d'un bouchon vissé.

Le tube 33B est donc rempli de diélectrique D de manière qu'initialement comme illustré sur la figure 2, le flotteur 33A touche le fond 33C du tube. Selon une particularité de construction du détecteur de niveau 33 selon l'invention, le fond 33C du tube est muni de protubérances pointues 33D tournées vers l'intérieur du tube pour empêcher un effet d'adhérence entre le sommet du flotteur 33A et le fond 33C. La partie du tube qui saille au-dessus de la surface supérieure de la cuve peut être transparente pour permettre un contrôle optique de la position du flotteur dans le tube et donc du niveau du diélectrique dans celle-ci.

La base 33E du tube en une matière isolante électriquement porte un aimant permanent 33H disposé entre les deux contacts 34A et 34B. Dans l'exemple illustré sur les figures 2 à 4, le flotteur comporte également un aimant permanent 33G disposé coaxialement à l'aimant 33H. L'aimant permanent 33G du flotteur est disposé dans une platine métallique conductrice 33J en forme de disque formant la partie inférieure du flotteur cylindrique, cette platine 33J servant en outre de lest pour le flotteur. Le flotteur est lesté de telle sorte que sont centre de gravité soit disposé en dessous de sa ligne de flottaison. Si le flotteur est un corps creux, il peut être lesté avec le diélectrique D du transformateur. Dans l'exemple montré sur les figures 2 à 4, l'aimant permanent 33H forme un plot inséré dans la base du tube depuis l'intérieur du tube 33B. Ce plot 33H doit être disposé en dessous d'une ligne située à l'interface entre le flotteur et les deux contacts 34A et 34B quand le flotteur connecte les deux contacts pour que la platine métallique 33J assure une continuité électrique fiable et stable entre les deux contacts.

Des ouvertures 33F sont aménagées dans le tube 33B à niveau avec le niveau de sécurité NS pour permettre l'écoulement du diélectrique du tube vers la cuve. Les deux contacts 34A et 34B sont disposés bien en dessous des ouvertures 33F et donc du niveau de sécurité NS de sorte que le flotteur 33A connecte les contacts 34A et 34B dans le diélectrique quand le diélectrique passe en dessous du niveau de sécurité NS.

Sur la figure 3, le niveau du diélectrique N dans la cuve s'est abaissé sans toutefois atteindre le niveau critique NS. Le flotteur 33A est toujours plaqué contre le fond du tube 33B.

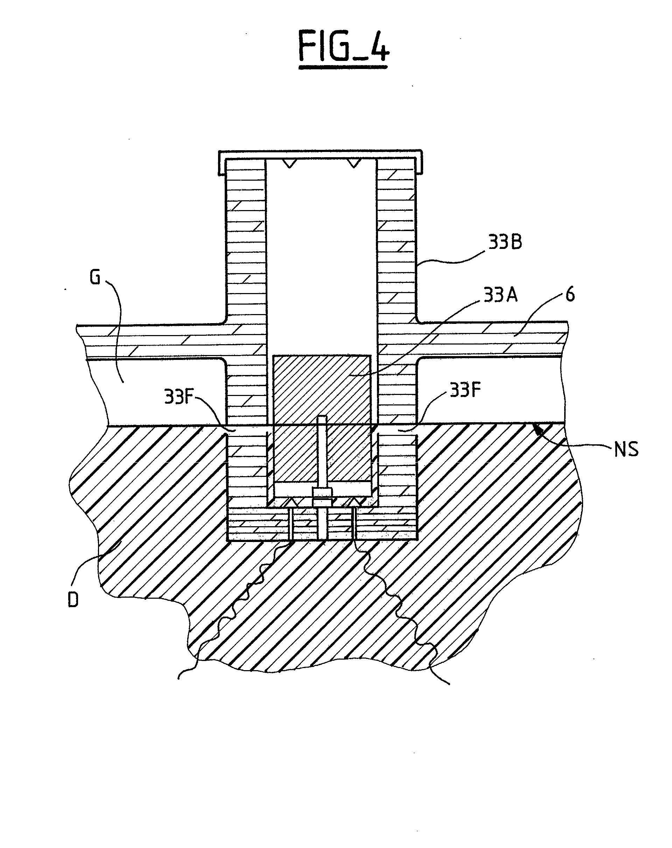

Sur la figure 4, le diélectrique atteint le niveau critique NS. Le gaz G présent au-dessus du diélectrique à l'intérieur de la cuve 6 peut pénétrer à l'intérieur du tube 33B par les ouvertures 33F. L'effet de colonne barométrique à l'intérieur du tube se trouve ainsi brutalement rompu et le diélectrique D contenu à l'intérieur du tube 33B au-dessus du niveau de sécurité NS s'écoule rapidement dans la cuve à travers les ouvertures 33F. Le flotteur 33A descend donc brutalement vers les deux contacts pour les connecter électriquement entre eux ce qui déclenche le court-circuiteur 29,30 à travers le percuteur 38 et donc la coupure des fusibles. Comme visible sur la figure 4, le flotteur 33A connecte les deux contacts 34A et 34B dans le diélectrique D et le contact mécanique entre les deux contacts et le flotteur est rendu irréversible par l'action du système d'attraction magnétique.

## Revendications

1. Un dispositif de détection de niveau de liquide diélectrique pour un transformateur haute tension ayant au moins un enroulement immergé dans ledit diélectrique, comprenant un tube (33B) muni de deux contacts électriques (34A,34B) écartés l'un de l'autre et un flotteur (33A) au moins en partie électriquement conducteur logé dans le tube et porté par le diélectrique remplissant normalement le tube, le flotteur connectant les deux contacts lorsque le niveau du diélectrique passe sous un certain niveau de sécurité (NS), **caractérisé en ce que** les deux contacts (34A,34B) sont disposés dans la base (33E) du tube, leur connexion par le flotteur se produisant dans le diélectrique et **en ce que** la base (33E) du tube et le flotteur (33A) comportent un système d'attraction magnétique.

2. Le dispositif selon la revendication 1, dans lequel le système d'attraction magnétique comprend un premier aimant permanent (33H) dans la base du tube qui attire le flotteur vers les deux contacts.

3. Le dispositif selon la revendication 2, dans lequel le premier aimant permanent (33H) est inséré dans la base du tube entre les deux contacts (34A,34B).

4. Le dispositif selon la revendication 2 ou 3, dans lequel le système d'attraction magnétique comprend un second aimant permanent (33G) dans le flotteur, lesdits premier (33H) et second (33G) aimants permanents s'attirant mutuellement.

5. Le dispositif selon la revendication 4, dans lequel lesdits premier et second aimants permanents (33H,33G) sont disposés de façon coaxiale l'un par rapport à l'autre dans le tube (33B).

6. Le dispositif selon l'une des revendications 1 à 5, dans lequel le flotteur (33A) est lesté de telle manière à avoir un centre de gravité situé sous sa ligne de flottaison dans le diélectrique.

7. Le dispositif selon la revendication 6, dans lequel le flotteur (33A) est un corps creux lesté avec le diélectrique.

8. Le dispositif selon l'une des revendications 1 à 7, dans lequel le tube (33B) est fermé à sa partie supérieure par un fond (33C) muni de protubérances pointues (33D) empêchant un effet d'adhérence entre le fond du tube et le sommet du flotteur.

9. Un transformateur haute tension comportant au moins un enroulement (1,2) plongé dans un liquide diélectrique (D) contenu dans une cuve (6) et un dispositif de détection de niveau selon l'une des revendications 1 à 8 disposé dans la cuve pour détecter un abaissement du niveau du diélectrique dans la cuve au-delà d'un niveau de sécurité prédéterminé (NS).

10. Un transformateur selon la revendication 9, dans lequel le tube (33B) du dispositif de détection de niveau est formé dans la paroi de la cuve.

11. Un transformateur selon la revendication 10, dans lequel le tube (33B) du dispositif de détection de niveau est fermé à sa partie supérieure par un bouchon amovible (33C) rendant accessible le flotteur depuis l'extérieur de la cuve.
